# EUROPÄISCHE PATENTSCHRIFT

(11) **EP 2 375 070 B1**
(45) Veröffentlichungstag und Bekanntmachung des Hinweises auf die Patenterteilung: **12.09.2012**
(21) Anmeldenummer: 11002510.3
(22) Anmeldetag: 02.07.2008
(51) Int. Cl.: B60T 8/36, F04B 1/04, F04B 11/00, F04B 53/16, B60T 8/40

(54) **Kolbenpumpe und Betriebsverfahren hierfür**
Reciprocating type piston pump and method of operation thereof
Pompe à piston et procédé d'opération de cette pompe

(30) Priorität: 17.07.2007 DE 102007033244
(43) Veröffentlichungstag der Anmeldung: 12.10.2011
(62) Teilanmeldung aus: 08773819.1
(73) Patentinhaber: Lucas Automotive GmbH, 56070 Koblenz (DE)
(72) Erfinder: Plewnia, Heinrich, 56316 Niederhofen (DE); Seibert, Werner, 56206 Kammerforst (DE)
(74) Vertreter: Röthinger, Rainer

(56) Entgegenhaltungen:
- WO-A-2007/024636
- CH-A- 374 042
- DE-A1- 4 229 969
- DE-A1- 19 961 851
- DE-A1-102005 046 619
- US-A1- 2007 176 484

## Beschreibung

### Technisches Gebiet

Die vorliegende Erfindung betrifft allgemein die Hydraulikdruck-Erzeugung in einer Fahrzeug-Bremsanlage. Insbesondere ist die Erfindung auf eine wenigstens sechs Zylinder/Kolben-Anordnungen umfassende Hydraulikpumpe gerichtet.

### Technischer Hintergrund

Moderne hydraulische oder elektrohydraulische Fahrzeugbremsanlagen erfordern zuverlässige Druckerzeuger, um sicherheitsrelevante Funktionen wie eine Antiblockierregelung oder eine Antriebsschlupfregelung implementieren zu können. Bei diesen Funktionen wird mittels des Druckerzeugers ein Hydraulikdruck zur Ansteuerung einer oder mehrerer Radbremsen generiert.

Ein derartiger Druckerzeuger ist beispielsweise aus der WO 2006/061178 A1 bekannt. Der Druckerzeuger umfasst eine Kolbenpumpe sowie einen elektromotorischen Aktuator zur Betätigung der Kolbenpumpe. Die Kolbenpumpe besitzt ein Gehäuse, in dem mehrere Zylinderbohrungen zur Aufnahme je eines Pumpenkolbens ausgebildet sind.

Je nach Bauform umfasst die in der WO 2006/061178 A1 beschriebene Kolbenpumpe 5, 6, 8 oder mehr Zylinder/Kolben-Anordnungen. Bei einer mehrkreisigen Fahrzeug-Bremsanlage können die einzelnen Zylinder/Kolben-Anordnungen in mehrere Sätze unterteilt und jeder Satz je einem Hydraulikkreis zugeordnet werden. Je mehr Zylinder/Kolben-Anordnungen dabei pro Satz vorgesehen sind, desto geringer sind die sich bei Regeleingriffen ergebenden Druckpulsationen und desto höher ist folglich der Betriebskomfort.

Aus der WO 99/64283 ist es bekannt, pro Hydraulikkreis je einen Satz von drei Zylinder/Kolben-Anordnungen vorzusehen. Die drei Zylinder/Kolben-Anordnungen jedes Hydraulikkreises sind dabei sternförmig innerhalb einer Ebene angeordnet. Die beiden sich derart ergebenden Ebenen sind parallel zueinander angeordnet und werden von einer gemeinsamen Exzenterwelle senkrecht durchsetzt. Die elektromotorisch angetriebene Exzenterwelle wirkt in bekannter Weise mit den in Richtung auf die Exzenterwelle vorgespannten Kolben zusammen, um Hydraulikfluid zu den Radbremsen oder von den Radbremsen weg zu fördern.

Ein Kolbenpumpen-Gehäuse mit den im Oberbegriff von Patentanspruch 1 definierten Merkmalen ist z.B. aus der DE 103 45 406 A1 bekannt.

Der Erfindung liegt die Aufgabe zugrunde, die Lebensdauer der bekannten Mehrkolbenpumpen bei gleichbleibendem Betriebskomfort zu erhöhen.

### Kurzer Abriss

Gemäß einem ersten Aspekt wird diese Aufgabe gelöst durch ein Kolbenpumpen-Gehäuse für einen Hydraulikdruck-Erzeuger in einer Fahrzeug-Bremsanlage, welches die Merkmale des kennzeichnenden Teils von Patentanspruch 1 aufweist.

Ist das Kolbenpumpen-Gehäuse mit acht, zehn oder mehr Zylindern ausgebildet, steigt die Anzahl der Zylinderebenen entsprechend auf vier, fünf oder mehr. Da für die beiden Pumpenkolben jeder Ebene ein separater Exzenter vorgesehen werden kann, vermindert sich der Exzenter-Verschleiß gegenüber den aus dem Stand der Technik bekannten Mehrkolbenpumpen mit drei, fünf oder gar acht Pumpenkolben pro Ebene und Exzenter.

Die sechs in dem Kolbenpumpen-Gehäuse vorgesehenen Zylinder sind in zwei Zylindersätze aufteilbar. Jeweils drei, auf unterschiedlichen Ebenen angeordnete Zylinder können dabei einen eigenen Satz bilden. Umfasst das Gehäuse mehr als sechs Zylinder, können die überzähligen Zylinder ebenfalls auf die beiden Zylindersätze verteilt werden oder aber einen dritten oder vierten usw. Zylindersatz bilden. So ist es beispielsweise denkbar, den ersten Satz Zylinder einem ersten Bremskreis und den zweiten Satz Zylinder einem zweiten Bremskreis zuzuordnen. Ein optional vorhandener dritter Satz Zylinder kann für eine Bremskraftverstärkung vorgesehen werden. Die Zylinder eines jeden Satzes können in einen gemeinsamen Fluidanschluss münden.

Für drei oder mehr, auf unterschiedlichen Ebenen angeordnete Zylinder kann ein gemeinsamer Fluidkanal, welcher die einzelnen Zylinder miteinander verbindet, vorgesehen sein. Es besteht die Möglichkeit, die einzelnen Zylinder derart relativ zueinander anzuordnen, dass der Fluidkanal geradlinig verläuft. Ein geradlinig verlaufender Fluidkanal kann mit einer einzigen Bohrung realisiert werden. Es ist auch denkbar, zwei (oder mehr) geradlinig verlaufende Fluidkanäle vorzusehen, wobei der erste Fluidkanal dann die Zylinder des ersten Satzes und der zweite Fluidkanal die Zylinder des zweiten Satzes miteinander verbindet.

Jeder Fluidkanal kann zwei gegenüberliegende Enden aufweisen. Ein erstes Ende kann durch ein separates Verschlusselement verschlossen sein oder als Grund eines Sacklochs ausgebildet werden. An seinem dem ersten Ende gegenüberliegenden Ende kann jeder Fluidkanal in einen Fluidanschluss münden. Gegenüber herkömmlichen Lösungen, bei denen ein Fluidkanal lediglich zwei, auf unterschiedlichen Ebenen gelegen Zylinder miteinander verbindet, kann die Anzahl der insgesamt vorzusehenden Verschlusselemente dadurch reduziert werden, dass, wie oben geschildert, mittels eines einzigen, geradlinig verlaufenden Fluidkanals drei oder mehr, auf unterschiedlichen Ebenen angeordnete Zylinder miteinander verbunden werden.

Zwei in benachbarten Ebenen angeordnete Zylinder desselben Satzes können einen Winkelabstand zueinander bezüglich der Aufnahmebohrung für die Exzenterwelle besitzen. Mit anderen Worten, die einzelnen Zylinder eines Satzes müssen nicht deckungsgleich hintereinander angeordnet werden. Ein gewisser Winkelversatz von auf benachbarten Ebenen angeordneten Zylinder ermöglicht beispielsweise eine dichtere Packung der einzelnen Ebenen und Zylinder (nach Art einer hexagonal dichten Packung) und damit geringere Gehäuseabmessungen. Beispielsweise kann im Fall eines solchen Winkelabstands von auf benachbarten Ebenen angeordneten Zylindern der Abstand zweier benachbarter Ebenen geringer als der maximale Durchmesser eines Zylinders gewählt werden.

Innerhalb einer einzelnen Ebene können sich die beiden Zylinder ungefähr gegenüberliegen. So kann der Winkelabstand der in einer einzelnen Ebene angeordneten beiden Zylinder innerhalb dieser Ebene bezüglich der Aufnahmebohrung für die Exzenterwelle ungefähr wenigstens 135° betragen. Als zweckmäßig hat sich beispielsweise ein Winkelabstand von ungefähr 150° herausgestellt.

Gemäß einem weiteren Aspekt wird eine Kolbenpumpen-Baugruppe bereitgestellt, die neben dem bereits erläuterten Kolbenpumpen-Gehäuse noch in den Zylindern des Gehäuses aufgenommene Pumpenkolben sowie eine in der Bohrung des Gehäuses aufgenommene Exzenterwelle zur Betätigung der Pumpenkolben umfasst. Auf der Exzenterwelle kann pro Ebene ein Exzenter vorgesehen sein. Die Exzenter können entweder einstückig mit der Exzenterwelle gefertigt werden oder aber separate Bauelemente darstellen. Bei drei Zylinderebenen und einem Exzenter pro Zylinderebene können die drei Exzenter relativ zueinander in Winkelstellungen von ungefähr 0°, 120° und 240° bezüglich einer Längsachse der Exzenterwelle angeordnet sein.

Neben dem Gehäuse, den Kolben und der Exzenterwelle kann die Kolbenpumpen-Baugruppe noch einen Antrieb für die Exzenterwelle umfassen. Bei diesem Antrieb handelt es sich beispielsweise um einen Elektromotor. Der Elektromotor kann in einem separaten Gehäuse untergebracht sein, welches an dem Kolbenpumpen-Gehäuse befestigbar ist.

Die Kolbenpumpen-Baugruppe kann Teil einer Kraftfahrzeug-Bremsanlage sein. Mittels der Kolbenpumpen-Baugruppe lässt sich eines bzw. lassen sich mehrere der nachfolgend aufgeführten Systeme realisieren: ein hydraulisches Bremskraftverstärkersystem, ein Antiblockiersystem (ABS), ein System zur Abstandsregelung, ein Antriebsschlupf-Regelsystem und ein Fahrstabilitätssystem (auch als elektronisches Stabilitätsprogramm, ESP, bezeichnet).

Ein weiterer Aspekt ist auf ein Verfahren zum Betreiben eines Hydraulikdruck-Erzeugers in einer Fahrzeug-Bremsanlage gerichtet, wobei der Hydraulikdruck-Erzeuger eine Kolbenpumpe mit sechs Zylindern und je einem darin aufgenommenen Pumpenkolben besitzt und wobei die Kolben paarweise in wenigstens drei voneinander beabstandeten Ebenen angeordnet sind. Das Verfahren umfasst den Schritt des Betätigens der Kolben derart, dass ein Phasenversatz zwischen einem oberen Totpunkt des einen und einem unteren Totpunkt des anderen Kolbens ein und derselben Ebene ungefähr 30° beträgt und der minimale Phasenversatz der Totpunkte von Kolben unterschiedlicher Ebenen sich ebenfalls ungefähr 30° beläuft.

### Kurze Beschreibung der Zeichnungen

Weitere Einzelheiten und Vorteile der Erfindung ergeben sich aus der nachfolgenden Beschreibung bevorzugter Ausführungsbeispiele sowie aus den Figuren. Es zeigt:
Fig. 1 ein Ausführungsbeispiel eines Kolbenpumpen-Gehäuses in einer perspektivischen Ansicht;
Fig. 2 eine Seitenansicht des Gehäuses gemäß Fig. 1;
Fign. 3a bis 3c drei Schnittansichten des Gehäuses gemäß Fig. 1 entlang der Linien A-A, B-B und C-C in Fig. 1;
Fig. 4 eine schematische Darstellung des Phasenversatzes oberer und unterer Totpunkte von in das Gehäuse gemäß Fig. 1 eingesetzten Pumpenkolben; und
Fig. 5 eine schematische Darstellung der Anordnung einer das Gehäuse gemäß Fig. 1 umfassenden Kolbenpumpe in einer Fahrzeug-Bremsanlage.

### Beschreibung bevorzugter Ausführungsbeispiele

Im Folgenden wird ein Druckerzeuger in Gestalt einer exemplarischen Mehrkolbenpumpe mit sechs Zylinder/Kolben-Anordnungen sowie deren Einsatz in einer hydraulischen Fahrzeug-Bremsanlage beschrieben. Der vorgestellte Druckerzeuger liefert den zur radindividuellen Ansteuerung von vier Radbremsen benötigten hydraulischen Druck und ist Bestandteil eines ESP-Systems mit integrierter ABS-Funktionalität. Abweichend von den vorgestellten Ausführungsbeispielen könnte der Druckerzeuger selbstverständlich auch beispielsweise acht oder mehr Zylinder/Kolben-Anordnungen umfassen. Ferner könnte der Druckerzeuger auch in einer elektrohydraulischen Fahrzeug-Bremsanlage sowie für andere oder zusätzliche Zwecke (wie für ein hydraulisches Bremskraftverstärkersystem) zum Einsatz gelangen.

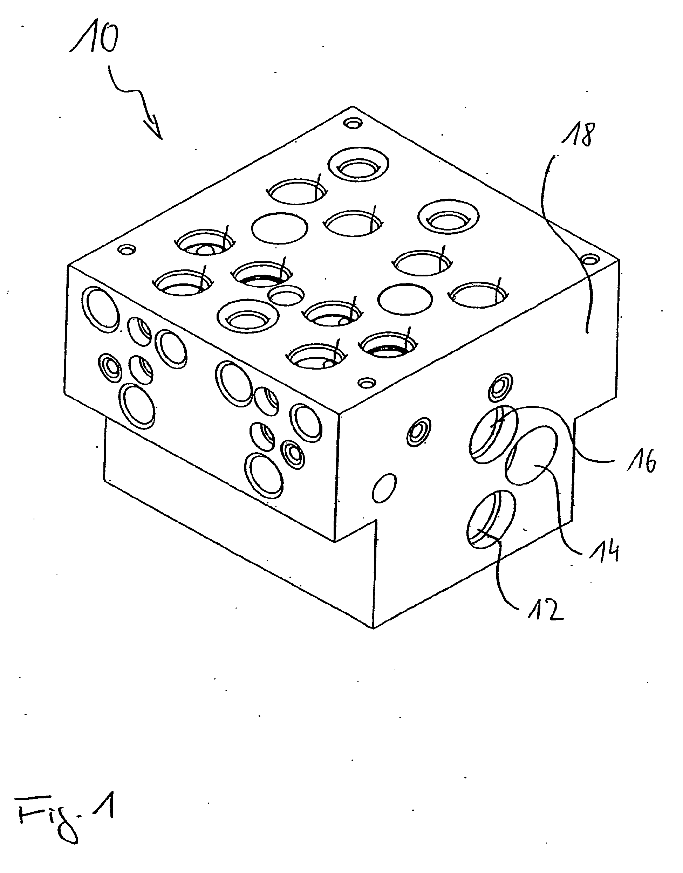

Fig. 1 zeigt eine perspektivische Ansicht eines Kolbenpumpen-Gehäuses 10 des Druckerzeugers. Das Gehäuse 10 besteht aus einem massiven Aluminiumblock, in den eine Vielzahl unterschiedlicher Bohrungen eingebracht ist. Die einzelnen Bohrungen sind für unterschiedliche Zwecke vorgesehen. So dienen einige der Bohrungen als Fluidkanäle und andere der Aufnahme von Hydraulikventilen. Insgesamt sechs weitere Bohrungen fungieren als Zylinder zur Aufnahme je eines Pumpenkolbens. In der perspektivischen Ansicht gemäß Fig. 1 sind drei solche Zylinder 12, 14, 16 dargestellt. Die dargestellten Zylinder 12, 14, 16 münden in entsprechende Öffnungen auf einer Vorderseite 18 des Zylinderblocks 10. Drei weitere solcher Zylinder münden in entsprechende Öffnungen auf der in Fig. 1 nicht erkennbaren Rückseite des Gehäuses 10.

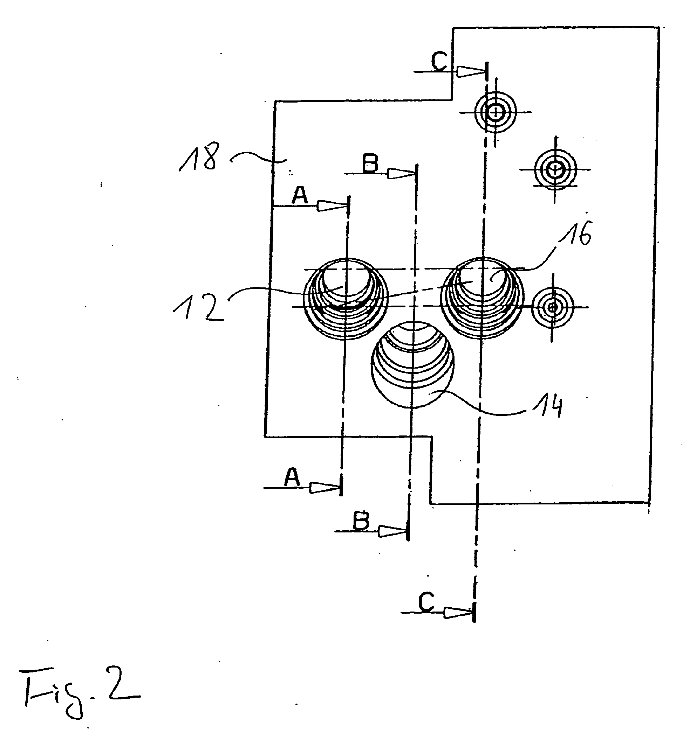

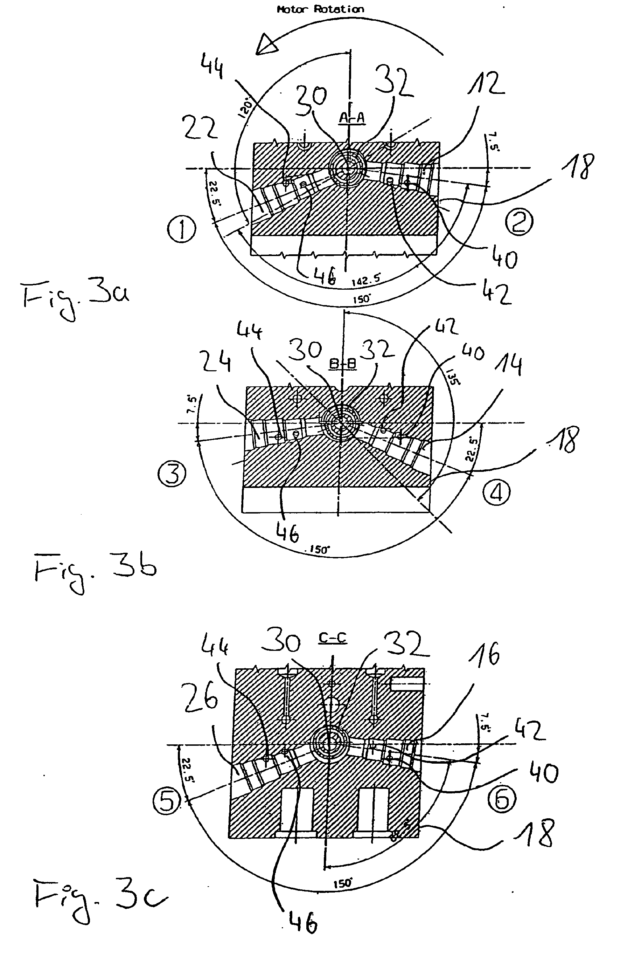

Fig. 2 zeigt eine Ansicht der Vorderseite 18 des Gehäuses 10 mit den in die Vorderseite 18 mündenden drei Zylindern 12, 14 und 16. In Fig. 2 sind drei Schnittlinien A-A, B-B und C-C dargestellt. Die diesen Schnittlinien entsprechenden Schnittansichten sind in den Fign. 3a, 3b und 3c wiedergegeben. Wie diesen Figuren zu entnehmen ist, entspricht jeder Schnittansicht eine senkrecht zur Vorderseite 18 gemäß Fig. 2 verlaufende Ebene mit jeweils zwei darin angeordneten Zylindern. So liegen in der durch die Schnittlinie A-A verlaufenden Ebene gemäß Fig. 3a der Zylinder 12 sowie ein weiterer Zylinder 22. Entsprechend liegen in der durch die Schnittlinie B-B verlaufenden Ebene gemäß Fig. 3b die beiden Zylinder 14 und 24 sowie in der durch die Schnittlinie C-C verlaufenden Ebene gemäß Fig. 3c die Zylinder 16 und 26.

Die drei in den Fign. 3a, 3b und 3c veranschaulichten Ebenen werden von einer senkrecht zu diesen Ebenen verlaufenden Bohrung 30 durchsetzt. In der Bohrung 30 ist eine Exzenterwelle 32 aufgenommen. Die Exzenterwelle 32 besitzt pro Ebene einen Exzenter, der im Ausführungsbeispiel einstückig mit der Welle ausgebildet ist.

Wie den Fign. 3a, 3b und 3c zu entnehmen ist, mündet jeder der Zylinder 12, 14, 16, 22, 24 und 26 in die Aufnahmebohrung 30. Aus diesem Grund können die in den Zylindern 12, 14, 16, 22, 24 und 26 aufzunehmenden Pumpenkolben in bekannter Weise mit den Exzentern zusammenwirken. In Folge dieses Zusammenwirkens führt jeder einzelne Kolben abwechselnd einen Förderhub und einen Rückhub aus. Ein Förderhub bezeichnet einen Hub, bei dem der Kolben das Volumen eines Verdrängungsraums in einem der Zylinder 12, 14, 16, 22, 24 und 26 verkleinert und dadurch Hydraulikfluid aus dem Gehäuse 10 ausstößt. Bei einem Rückhub hingegen wird das Volumen des Verdrängungsraums wieder vergrößert und Hydraulikfluid in das Gehäuse 10 eingesaugt.

Die sechs Zylinder 12, 14, 16, 22, 24 und 26 sind in zwei Zylinder-Sätze aufgeteilt. Ein erster Satz wird von den in den Fign. 3a, 3b und 3c auf der rechten Seite liegenden Zylindern 12, 14 und 16 gebildet. Die verbleibenden Zylinder 22, 24 und 26 auf der linken Seite bilden einen zweiten Zylinder-Satz. Jeder Zylinder-Satz umfasst daher drei einzelne Zylinder.

Die drei Zylinder jedes Zylinder-Satzes sind mittels zweier geradlinig verlaufender Fluidkanäle miteinander verbunden. Genauer gesagt verbinden zwei Fluidkanäle 40, 42 die Zylinder 12, 14 und 16. Zwei weitere Fluidkanäle 44, 46 verbinden hingegen die drei Zylinder 22, 24 und 26. Jeweils zwei dieser insgesamt vier Fluidkanäle 42, 46 münden in Fluideinlässe, um bei einem Rückhub Fluid anzusaugen, während die beiden verbleibenden Fluidkanäle 40, 44 in Fluidauslässe münden, aus denen das von den Kolben verdrängte Hydraulikfluid ausgestoßen wird. Ein Ende jedes der Fluidanschlüsse 40, 42, 44 und 46 mündet daher in einen Fluidanschluss. Das jeweils gegenüberliegende Ende ist hingegen entweder nach Art eines Sacklochs ausgebildet oder mittels eines separaten Verschlusselements (nicht dargestellt) verschlossen. Die insgesamt sechs Zylinder 12, 14, 16, 22, 24 und 26 sind also mittels insgesamt nur vier Fluidkanälen 40, 42, 44, 46 miteinander verbunden, die auf einfache Weise durch lediglich vier Bohrungen im Gehäuse 10 ausgebildet werden können. Ferner sind vier Verschlusselemente ausreichend, um die vier Fluidkanäle 40, 42, 44 und 46 fluiddicht abzuschließen. Gegenüber anderen Kolbenpumpen mit sechs Zylinder/Kolbenanordnungen, die auf lediglich zwei Ebenen verteilt sind, müssen bei der Kolbenpumpe des Ausführungsbeispiels daher deutlich weniger Fluidkanäle ausgebildet werden, was die Herstellung beschleunigt und kostengünstiger macht. Ferner sind weniger Verschlusselemente vorzusehen, was ebenfalls die Herstellung günstiger macht und außerdem die Leckanfälligkeit reduziert. Ein weiterer Vorteil der Kolbenpumpe gemäß dem Ausführungsbeispiel besteht darin, dass die insgesamt sechs Zylinder/Kolben-Anordnungen auf drei Ebenen verteilt werden können, so dass jeder einzelne Exzenter mit lediglich zwei Kolben zusammenwirkt. Gegenüber anderen Mehrkolbenpumpen, bei denen sechs Zylinder/Kolben-Anordnungen auf lediglich zwei Ebenen verteilt sind, reduziert sich damit der Verschleiß zwischen Exzenter und Kolbenfuß. Ferner erhöht sich der Wirkungsgrad der Kolbenpumpe.

Wie bei einem Vergleich der Ebene gemäß Fig. 3a mit der Ebene gemäß Fig. 3b bzw. bei einen Vergleich der Ebene gemäß Fig. 3b mit der Ebene gemäß Fig. 3c deutlich wird, besitzen zwei in benachbarten Ebenen angeordnete Zylinder desselben Zylinder-Satzes jeweils einen Winkelabstand von 15° zueinander. Dieser Winkelabstand von 15° ergibt sich aus der Differenz der Neigungen der Zylinder 12, 14, 16, 22, 24 und 26 zur Horizontalen. So beträgt die Neigung des Zylinders 12 zur Horizontalen 7,5° (vgl. Fig. 3a) während sich die Neigung des Zylinders 14 bezüglich der Horizontalen auf 22,5° beläuft (vgl. Fig. 3b). Der Winkelabstand zwischen den Zylindern 12 und 14 beträgt daher 15°.

Der Winkelabstand zwischen auf benachbarten Ebenen angeordneten Zylindern desselben Zylinder-Satzes ermöglicht eine dichtere Packung der Zylinderbohrungen. Dieser Sachverhalt ist beispielsweise aus Fig. 2 ersichtlich. Die dort mit den Linien A-A und B-B angedeuteten benachbarten Ebenen weisen einen Abstand voneinander auf, der geringer als der maximale Durchmesser jedes der Zylindern 12, 14 und 16 ist. Mit anderen Worten, der minimale Abstand zwischen den beiden Zylindern 12 und 14 ist geringer als der maximale Durchmesser des Zylinders 14.

Wie ferner den Fign. 3a, 3b und 3c zu entnehmen ist, liegen sich die in jeweils einer Ebene angeordneten beiden Zylinder 12 und 22 bzw. 14 und 24 bzw. 16 und 26 ungefähr gegenüber. Im Ausführungsbeispiel beträgt der (kleinste) Winkelabstand zwischen den sich nicht unmittelbar gegenüberliegenden Zylindern jedes dieser Zylinderpaare 150°. Es wäre jedoch auch denkbar, den Winkelabstand auf 180° zu erhöhen oder bis auf ungefähr 135° zu reduzieren. Der Ansatz, die beiden in einer Ebene angeordneten Zylinder ungefähr gegenüberliegend vorzusehen, ermöglicht eine weitere Verringerung des Gehäusevolumens insbesondere im Vergleich zu herkömmlichen Mehrkolbenpumpen mit drei oder mehr sternförmig angeordneten Zylindern pro Ebene.

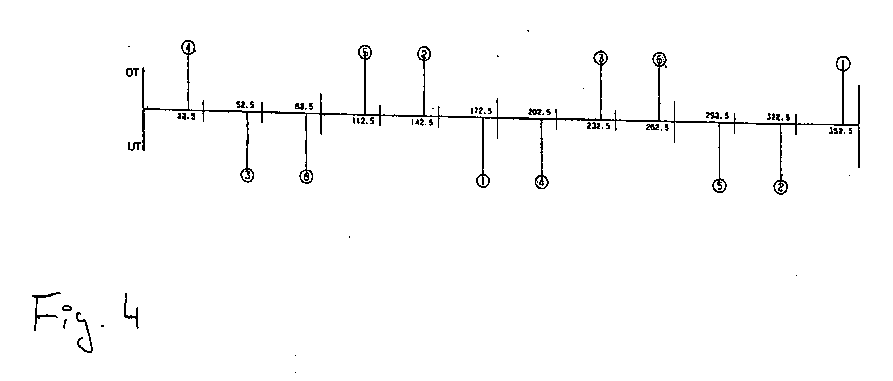

Fig. 4 ist ein schematisches Diagramm, welches den Phasenversatz zwischen einem oberen Totpunkt (OT) und einem unteren Totpunkt (UT) der in den Zylindern 12, 14, 16, 22, 24 und 26 anzuordnenden Kolben bei deren Zusammenwirken mit den Exzentern veranschaulicht. Das Bezugszeichen 1 bezeichnet dabei den (in Fig. 3a nicht dargestellten) Kolben im Zylinder 22. Entsprechend steht 2 für den Kolben im Zylinder 18, 3 für den Kolben im Zylinder 24, 4 für den Kolben im Zylinder 14, 5 für den Kolben im Zylinder 26 und 6 für den Kolben im Zylinder 6.

Bei der graphischen Veranschaulichung gemäß Fig. 4 wird von den in den Fign. 3a, 3b und 3c veranschaulichten Winkellagen der Zylinder 12, 14, 16, 22, 24 und 26 ausgegangen. Ferner wird davon ausgegangen, dass der Winkelversatz zwischen den drei Exzentern auf der Exzenterwelle 32 jeweils 120° beträgt. Wenn man also die Winkelstellung des in Fig. 3a gezeigten Exzenters mit 0° definiert, besitzt der Exzenter gemäß Fig. 3b eine Winkelstellung von 120° und der Exzenter gemäß Fig. 3c eine Winkelstellung von 240°.

Die in den Fign. 3a, 3b und 3c veranschaulichte Wahl der Winkelausrichtungen bewirkt, dass der Phasenversatz bei der in Fig. 3a oben angegebenen Drehrichtung der Exzenterwelle 32 zwischen einem oberen Totpunkt des einen und einem unteren Totpunkt des anderen Kolbens ein und derselben Ebene 30° beträgt. So erreicht Kolben 4 seinen oberen Totpunkt bei 22,5° und der in derselben Ebene angeordnete Kolben 3 seinen unteren Totpunkt bei 52,5°. Der Phasenversatz beträgt also 30°. Derselbe Phasenversatz existiert zwischen dem unteren Totpunkt des Kolbens 6 (82,5°) und dem oberen Totpunkt des in derselben Ebene angeordneten Kolbens 5 (112,5°) sowie dem oberen Totpunkt des Kolbens 2 (142,5°) und dem unteren Totpunkt des in derselben Ebene angeordneten Kolbens 1 (172,5°) und umgekehrt.

Außerdem ist Fig. 4 zu entnehmen, dass der minimale Phasenversatz von Totpunkten der Pumpenkolben unterschiedlicher Ebenen ebenfalls 30° beträgt. So erreicht der Kolben 3 seinen unteren Totpunkt bei 52,5° und der Kolben 6 der benachbarten Ebene seinen unteren Totpunkt bei 82,5°. Entsprechendes gilt für die beiden oberen Totpunkte der Kolben 5 und 2, die beiden unteren Totpunkte der Kolben 1 und 4, die beiden oberen Totpunkte der Kolben 3 und 6, die beiden unteren Totpunkte der Kolben 5 und 2 sowie die beiden oberen Totpunkte der Kolben 1 und 4.

Insgesamt erzielt man durch die in Fig. 4 veranschaulichte Wahl des Phasenversatzes der oberen und unteren Totpunkte eine vorteilhafte Dämpfung von Druckpulsationen nach Art einer 12-Kolbenpumpe.

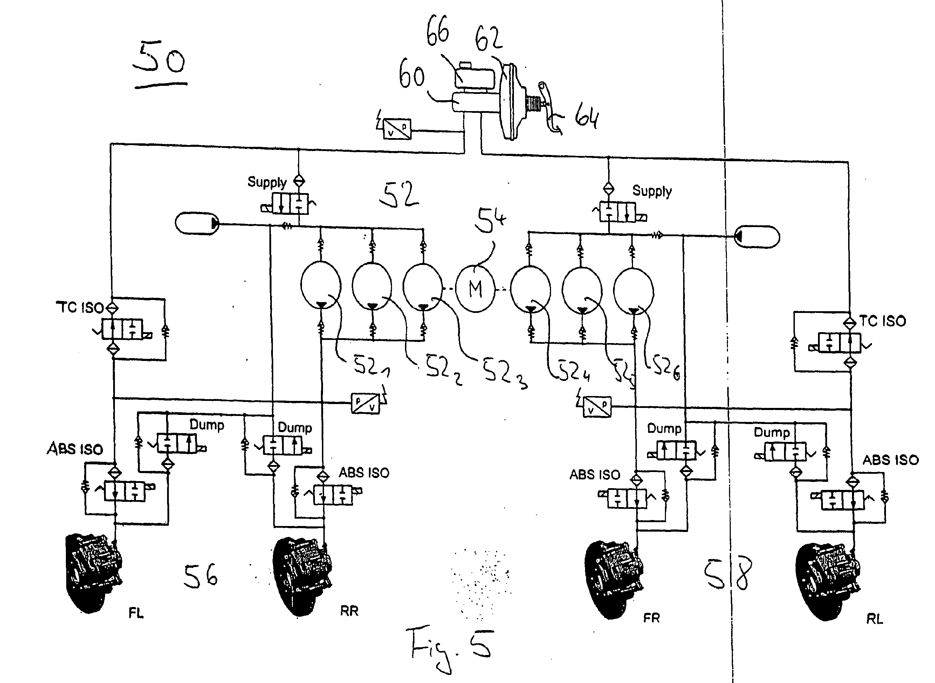

Fig. 5 zeigt eine schematische Darstellung einer zweikreisigen Fahrzeug-Bremsanlage 50, bei der die unter Bezugnahme auf die Fign. 1 bis 4 erläuterte Mehrkolbenpumpe zum Einsatz gelangt. Der Druckerzeuger 52 umfasst sechs Zylinder-Kolben-Anordnungen 52₁, 52₂, 52₃, 52₄, 52₅ und 52₆ sowie einen Antriebsmotor 54. Der Antriebsmotor 54 ist ein Elektromotor, welcher die in den Fign. 3a, 3b und 3c dargestellte Exzenterwelle 32 antreibt.

Die beiden Bremskreise der Fahrzeug-Bremsanlage 50 entsprechen einer Diagonalaufteilung, bei der ein erster Bremskreis 56 das linke Vorderrad FL sowie das rechte Hinterrad RR und ein zweiter Bremskreis 58 das rechte Vorderrad FR sowie das linke Hinterrad RL umfasst. Beide Bremskreise 56, 58 sind im Betriebsbremsbetrieb über einen zweikreisigen Hauptbremszylinder 60 und einen Unterdruck-Bremskraftverstärker 62 mit einem Bremspedal 64 gekoppelt. Im Betriebsbremsbetrieb sind die Ventile TC ISO sowie ABS ISO geöffnet, so dass Fluid aus einem Reservoir 66 in den Hauptbremszylinder 60 und von dort bei einer Betätigung des Pedals 64 zu den vier Radbremsen FL, RR, FR und RL gelangen kann.

Im ABS-Betrieb wird durch ein Zusammenspiel von mittels des Druckerzeugers 52 bewirkten Fluiddruckerhöhungen sowie Druckverringerungen (durch Öffnen der Ventile "Dump") ein ABS-Regeleingriff durchgeführt. Bei Durchführen eines die Traktion erhöhenden Regeleingriffs (Traction Control, TC) oder einer Fahrdynamik-Regelung (ESP oder Vehicle Stability Control, VSC) wird der Hauptbremszylinder 60 durch Schließen der Ventile TC ISO von den Radbremsen FL, RR, FR und RL getrennt und ein Fluiddruck an einer oder mehreren der Radbremsen FL, RR, FR und RL mittels des Druckerzeugers 52 bereitgestellt.

Wie bereits oben erläutert, veranschaulichen die Fign. 1 bis 5 beispielhafte Ausführungsbeispiele. Es steht im Ermessen des Fachmanns, diese Ausführungsbeispiele im Umfang der beigefügten Patentansprüche abzuändern.

## Patentansprüche

1. Kolbenpumpen-Gehäuse (10) für einen Hydraulikdruck-Erzeuger (52) in einer Fahrzeug-Bremsanlage (50), umfassend
- eine Bohrung (30) zur Aufnahme einer Exzenterwelle (32); und
- wenigstens sechs Zylinder (12, 14, 16, 22, 24, 26) zur Aufnahme je eines Pumpenkolbens (1, 2, 3, 4, 5, 6), wobei die Zylinder (12, 14, 16, 22, 24, 26) paarweise in wenigstens drei voneinander beabstandeten Ebenen (A-A, B-B, C-C) angeordnet sind und jeweils in die Bohrung (30) münden, und **dadurch gekennzeichnet dass** der Abstand zweier benachbarter Ebenen (A-A, B-B, C-C) geringer als der maximale Durchmesser jedes der wenigstens sechs Zylinder (12, 14, 16, 22, 24, 26) ist.

2. Kolbenpumpen-Gehäuse nach Anspruch 1, wobei die Zylinderpaare benachbarter Ebenen (A-A, B-B, C-C) in Umfangsrichtung der Bohrung (30) unter einem Winkelversatz zueinander angeordnet sind.

3. Kolbenpumpen-Gehäuse (10) nach Anspruch 1 oder 2, **dadurch gekennzeichnet,**
**dass** die wenigstens sechs Zylinder in zwei Sätze aufgeteilt sind.

4. Kolbenpumpen-Gehäuse nach einem der vorhergehenden Ansprüche, ferner umfassend
wenigstens einen geradlinig verlaufenden Fluidkanal (40, 42, 44, 46), der wenigstens drei, auf unterschiedlichen Ebenen angeordnete Zylinder miteinander verbindet.

5. Kolbenpumpen-Gehäuse (10) nach Anspruch 3, ferner umfassend wenigstens zwei geradlinig verlaufende Fluidkanäle (40, 42, 44, 46), wobei der erste Fluidkanal die Zylinder des ersten Satzes und der zweite Fluidkanal die Zylinder des zweiten Satzes miteinander verbindet.

6. Kolbenpumpen-Gehäuse (10) nach Anspruch 4 oder 5, **dadurch gekennzeichnet,**
**dass** jeder Fluidkanal an seinem ersten Ende durch ein Verschlusselement verschlossen ist und/oder an seinem zweiten Ende in einen Fluidanschluss mündet.

7. Kolbenpumpen-Gehäuse (10) nach einem der Ansprüche 1 bis 6, **dadurch gekennzeichnet,**
**dass** sich die in einer Ebene angeordneten beiden Zylinder ungefähr gegenüberliegen.

8. Kolbenpumpen-Gehäuse (10) nach einem der Ansprüche 1 bis7, **dadurch gekennzeichnet,**
**dass** der Winkelabstand der in einer Ebene angeordneten beiden Zylinder innerhalb der Ebene bezüglich der Bohrung ungefähr wenigstens 135° beträgt.

9. Kolbenpumpen-Gehäuse (10) nach Anspruch 8, **dadurch gekennzeichnet,**
**dass** der Winkelabstand der in einer Ebene angeordneten beiden Zylinder innerhalb der Ebene bezüglich der Bohrung ungefähr 150° beträgt.

10. Kolbenpumpen-Gehäuse (10) nach einem der Ansprüche 3 bis 9, **dadurch gekennzeichnet,**
**dass** der erste Satz Zylinder (52₁, 52₂, 52₃) einem ersten Bremskreis (56) und der zweite Satz Zylinder (52₄, 52₅, 52₆) einem zweiten Bremskreis (58) zugeordnet ist.

11. Kolbenpumpen-Baugruppe (52), umfassend
- das Kolbenpumpen-Gehäuse (10) nach einem der Ansprüche 1 bis 10;
- in den Zylindern (12, 14, 16, 22, 24, 26) des Gehäuses aufgenommene Pumpenkolben (1, 2, 3, 4, 5, 6); und
- eine in der Bohrung (30) des Gehäuses (10) aufgenommene Exzenterwelle (32) zur Betätigung der Pumpenkolben.

12. Kolbenpumpen-Baugruppe (52) nach Anspruch 11, **dadurch gekennzeichnet, dass** auf der Exzenterwelle (32) pro Ebene (A-A, B-B, C-C) ein Exzenter vorgesehen ist und die drei Exzenter relativ zueinander in Winkelstellungen von ungefähr 0°, 120° und 240° bezüglich einer Achse der Exzenterwelle (32) angeordnet sind.

13. Kolbenpumpen-Baugruppe (52) nach Anspruch 11 oder 12, ferner umfassend einen elektromotorischen Antrieb (54) für die Exzenterwelle (32).

14. Kraftfahrzeug-Bremsanlage (50), umfassend die Kolbenpumpen-Baugruppe (52) nach einem der Ansprüche 11 bis 13.

15. Verfahren zum Betreiben eines Hydraulikdruck-Erzeugers (52) in einer Fahrzeug-Bremsanlage (50), wobei der Hydraulikdruck-Erzeuger eine Kolbenpumpe mit wenigstens sechs Zylindern (12, 14, 16, 22, 24, 26) sowie je einem darin aufgenommenen Pumpenkolben (52₁, 52₂, 52₃, 52₄, 52₅, 52₆) besitzt, wobei die Zylinder (12, 14, 16, 22, 24, 26) paarweise in wenigstens drei voneinander beabstandeten Ebenen (A-A, B-B, C-C) angeordnet sind und wobei der Abstand zweier benachbarter Ebenen (A-A, B-B, C-C) geringer als der maximale Durchmesser jedes der wenigstens sechs Zylinder (12, 14, 16, 22, 24, 26) ist, umfassend den Schritt des Betätigens der Pumpenkolben, derart, dass ein Phasenversatz zwischen einem oberen Totpunkt des einen und einem unteren Totpunkt des anderen Kolbens ein und derselben Ebene ungefähr 30° beträgt und ein minimaler Phasenversatz von Totpunkten der Pumpenkolben unterschiedlicher Ebenen (A-A, B-B, C-C) ebenfalls ungefähr 30° beträgt.

## Claims

1. A piston pump housing (10) for a hydraulic pressure generator (52) in a vehicle brake system (15), comprising
- a bore (30) for receiving an eccentric shaft (32); and
- at least six cylinders (12, 14, 16, 22, 24, 26) for receiving a respective piston pump (1, 2, 3, 4, 5, 6), wherein the cylinders (12, 14, 16, 22, 24, 26) are disposed in pairs in at least three mutually spaced apart planes (A-A, B-B, C-C) and opened out into the bore (30), and **characterized in that** the distance between two adjacent planes (A-A, B-B, C-C) is smaller than the maximum diameter of each of the at least six cylinders (12, 14, 16, 22, 24, 26).

2. The piston pump housing according to claim 1, wherein the pairs of cylinders of adjacent planes (A-A, B-B, C-C) are disposed in circumferential direction of the bore (30) in an angular distance from one another.

3. The piston pump housing (10) according to claim 1 or 2, **characterized in that** the at least six cylinders are divided into two sets.

4. The piston pump housing according to any one of the preceding claims, further comprising at least one fluid channel (40, 42, 44, 46) running in a straight line that connects at least three cylinders to one another that are disposed on different planes.

5. The piston pump housing (10) according to claim 3, further comprising at least two fluid channels (40, 42, 44, 46) running in a straight line, wherein the first fluid channel connects the cylinders of the first set to one another and the second fluid channel connects the cylinders of the second set to one another.

6. The piston pump housing (10) according to claim 4 or 5, **characterized in that** each fluid channel is closed at its first end by a closure element and/or opens out at its second end into a fluid port.

7. The piston pump housing (10) according to any one of claims 1 to 6, **characterized in that** the two cylinders disposed in a plane lie approximately opposite one another.

8. The piston pump housing (10) according to any one of claims 1 to 7, **characterized in that** within a plane the angular distance of the two cylinders disposed in the plane is approximately at least 135° in relation to the bore.

9. The piston pump housing (10) according to claim 8, **characterized in that** within a plane the angular distance of the two cylinders disposed in the plane is approximately 150° in relation to the bore.

10. The piston pump housing (10) according to any one of claims 3 to 9, **characterized in that** the first set of cylinders (52₁, 52₂, 52₃) is assigned to a first brake circuit (56) and the second set of cylinders (52₄, 52₅, 52₆) is assigned to a second brake circuit (58).

11. A piston pump assembly (52) comprising:
- the piston pump housing (10) according to any one of claims 1 to 10;
- pump pistons (1, 2, 3, 4, 5, 6) which are received in the cylinders (12, 14, 16, 22, 24, 26) of the housing; and
- an eccentric shaft (32) accommodated in the bore (30) of the housing (10) for actuating the pump pistons.

12. The piston pump assembly (52) according to claim 11, **characterized in that** on the eccentric shaft (32) one eccentric per plane (A-A, B-B, C-C) is provided and that the three eccentrics are disposed relative to one another in angular positions of approximately 0°, 120° and 240° in relation to an axis of the eccentric shaft (32).

13. The piston pump assembly (52) according to claim 11 or 12, further comprising an electromotive drive (54) for the eccentric shaft (32).

14. A motor vehicle brake system (50) comprising the piston pump assembly (52) according to any one of claims 11 to 13.

15. A method of operating a hydraulic pressure generator (52) in a motor vehicle brake system (50), wherein the hydraulic pressure generator has a piston pump with at least six cylinders (12, 14, 16 22, 24, 26) and one pump piston (52₁, 52₂, 52₃, 52₄, 52₅, 52₆) accommodated therein, wherein the cylinders (12, 14, 16, 22, 24, 26) are disposed in pairs in at least three mutually spaced apart planes (A-A, B-B, C-C) and wherein the distance between two adjacent planes (A-A, B-B, C-C) is smaller than the maximum diameter of each of the at least six cylinders (12, 14, 16, 22, 24, 26), comprising the step of actuating the pump pistons in such a way that a phase displacement between a top dead center of the one piston and a bottom dead center of the other piston of one and the same plane is approximately 30° and a minimum phase displacement of dead centers of the pump pistons of different planes is likewise approximately 30°.

## Revendications

1. Boîtier de pompe à pistons (10) pour un générateur de pression hydraulique (52) dans un système de freinage de véhicule automobile (50), comportant
- un alésage (30) permettant de loger un arbre à excentrique (32), et
- au moins six cylindres (12, 14, 16, 22, 24, 26) destinés à recevoir chacun un piston de pompe (1, 2, 3, 4, 5, 6), lesdits cylindres (12, 14, 16, 22, 24, 26) étant disposés par paires dans au moins trois plans (A-A, B-B, C-C) espacés les uns des autres et débouchant chacun dans ledit alésage (30), **caractérisé en ce que** l'écart entre deux plans voisins (A-A, B-B, C-C) est inférieur au diamètre maximal de chacun desdits six cylindres (12, 14, 16, 22, 24, 26).

2. Boîtier de pompe à pistons selon la revendication 1, les paires de cylindre de plans voisins (A-A, B-B, C-C) étant disposés les uns par rapport aux autres selon un décalage angulaire dans la direction circonférentielle de l'alésage (30).

3. Boîtier de pompe à pistons (10) selon la revendication 1 ou 2, **caractérisé en ce que** lesdits six cylindres sont répartis en deux jeux.

4. Boîtier de pompe à pistons selon l'une des revendications précédentes, comportant en outre au moins un canal fluidique (40, 42, 44, 46) qui s'étend de manière rectiligne et qui relie entre eux au moins trois cylindres disposés dans des plans différents.

5. Boîtier de pompe à pistons (10) selon la revendication 3, comportant en outre au moins deux canaux fluidiques (40, 42, 44, 46) qui s'étendent de manière rectiligne, le premier canal fluidique reliant entre eux les cylindres du premier jeu, et le deuxième canal fluidique, les cylindres du second jeu.

6. Boîtier de pompe à pistons (10) selon la revendication 4 ou 5, **caractérisé en ce que** chaque canal fluidique est obturé, à sa première extrémité, par un élément obturateur et/ou débouche, à sa deuxième extrémité, dans un raccord fluidique.

7. Boîtier de pompe à pistons (10) selon l'une des revendications 1 à 6, **caractérisé en ce que** les deux cylindres disposés dans un plan sont approximativement opposés.

8. Boîtier de pompe à pistons (10) selon l'une des revendications 1 à 7, **caractérisé en ce que** l'écart angulaire entre les deux cylindres disposés dans un plan est, en dedans du plan et par rapport à l'alésage, environ au moins de 135°.

9. Boîtier de pompe à pistons (10) selon la revendication 8, **caractérisé en ce que** l'écart angulaire entre les deux cylindres disposés dans un plan est, en dedans du plan et par rapport à l'alésage, environ de 150°.

10. Boîtier de pompe à pistons (10) selon l'une des revendications 3 à 9, **caractérisé en ce que** le premier jeu de cylindres (52₁, 52₂, 52₃) est associé à un premier circuit de freinage (56), et le deuxième jeu de cylindres (52₄, 52₅, 52₆), à un deuxième circuit de freinage (58).

11. Module à pompe à pistons (52) comportant
- le boîtier de pompe à pistons (10) selon l'une des revendications 1 à 10,
- les pistons de pompe (1, 2, 3, 4, 5, 6) logés dans les cylindres (12, 14, 16, 22, 24, 26) du boîtier de pompe à pistons, et
- un arbre à excentrique (32) logé dans l'alésage du boîtier (30) et permettant d'actionner les pistons de pompe.

12. Module à pompe à pistons (52) selon la revendication 11, **caractérisé en ce qu'**il est prévu, par plan (A-A, B-B, C-C), un excentrique sur l'arbre à excentrique (32) et **en ce que** les trois excentriques sont disposés les uns par rapport aux autres selon des positions angulaires d'environ 0°, 120° et 240° par rapport à un axe de l'arbre à excentrique (32).

13. Module à pompe à pistons (52) selon la revendication 11 ou 12, comportant en outre un entraînement à moteur électrique (54) pour l'arbre à excentrique (32).

14. Système de freinage de véhicule automobile (50), comportant le module à pompe à pistons (52) selon l'une des revendications 11 à 13.

15. Procédé permettant le fonctionnement d'un générateur de pression hydraulique (52) dans un système de freinage de véhicule automobile (50), le générateur de pression hydraulique (52) possédant une pompe à pistons avec au moins six cylindres (12, 14, 16, 22, 24, 26) contenant chacun un piston (52₁, 52₂, 52₃, 52₄, 52₅, 52₆), les cylindres (12, 14, 16, 22, 24, 26) étant disposés par paires dans au moins trois plans (A-A, B-B, C-C) espacés les uns des autres, et l'écart entre deux plans voisins (A-A, B-B, C-C) étant inférieur au diamètre maximal de chacun desdits six cylindres (12, 14, 16, 22, 24, 26), comprenant comme étape l'actionnement des pistons de pompe de manière à avoir un décalage de phase d'environ 30° entre un point mort haut de l'un des pistons et un point mort bas de l'autre piston d'un même plan et un décalage de phase minimum également d'environ de 30° entre les points morts des pistons de pompe de plans différents (A-A, B-B, C-C).
